# EUROPÄISCHE PATENTSCHRIFT

(11) **EP 1 584 223 B1**
(45) Veröffentlichungstag und Bekanntmachung des Hinweises auf die Patenterteilung: **25.03.2009**
(21) Anmeldenummer: 05007384.0
(22) Anmeldetag: 05.04.2005
(51) Int. Cl.: A01B 73/00, A01G 17/02

(54) **Vorrichtung mit einer Bearbeitungseinrichtung an einem landwirtschaftlichen Fahrzeug**
Agricultural vehicle working device arrangement
Arrangement pour dispositif de travail sur un vehicule agricole

(30) Priorität: 05.04.2004 DE 102004016656
(43) Veröffentlichungstag der Anmeldung: 12.10.2005
(73) Patentinhaber: Binger Seilzug GmbH & Co KG, 55411 Bingen (DE)
(72) Erfinder: Pieroth, Armin, 55411 Bingen (DE); Pieroth, Udo, 55411 Bingen (DE)
(74) Vertreter: Lemcke, Brommer & Partner

(56) Entgegenhaltungen:
- EP-A- 0 916 244
- WO-A-03/086050
- US-A- 4 413 685
- US-A1- 2003 127 235

## Beschreibung

Die Erfindung bezieht sich auf eine Vorrichtung zum Anbau an ein landwirtschaftliches Fahrzeug, insbesondere einen Traktor, mit mindestens einer mittels einer elektronischen Steuerung und zugeordnetem Stellorgan lageverstellbaren Bearbeitungseinrichtung für Pflanzen in Reihenkulturen, die zumindest in einer Arbeitsstellung, die durch die Höhe und Breite der Pflanzen der Reihenkultur und die Neigung des Geländes bestimmt ist, seitlich über das Fahrzeug hervorsteht.

Bekannte Bearbeitungseinrichtungen, z. B. Laubschneider, Vorschneider, Spritz- sowie Sprühgeräte und Entlaubungsgeräte, werden insbesondere als Frontanbaugeräte in Reihenkulturen, wie Wein-, Obst-, Garten-, Hopfen-, und Gemüseanbau, eingesetzt, wobei es oftmals erforderlich ist, die Bearbeitungseinrichtung am Ende einer Reihe in eine bestimmte Position zu verfahren, die nicht ihrer Arbeitsstellung entspricht, um beispielsweise den zum Wenden des Fahrzeuges benötigten Platz zu minimieren oder die Kippsicherheit des Fahrzeuges zu verbessern. Hierzu wird die Bearbeitungseinrichtung soweit wie möglich zur Mitte des Fahrzeuges hin verfahren bzw. geneigt. Auch beim Transport der Bearbeitungseinrichtung über eine Strasse oder einen Feldweg ist es notwendig, die Bearbeitungseinrichtung möglichst zur Mitte des Fahrzeuges zu verlagern, um die maximale Breite des Fahrzeuges mit der Bearbeitungseinrichtung zu minimieren. Die Arbeitsstellung der Bearbeitungseinrichtung ist abhängig von geometrischen Abmessungen der Reihenkulturen, wie beispielsweise einem Reihenabstand oder der Höhe eines Drahtrahmens im Weinbau bzw. beim Hopfen. Im Weiteren wird die Arbeitsstellung von der Neigung des Geländes, auf dem sich die Reihenkultur befindet, bestimmt. Um die Bearbeitungseinrichtung von der Transportstellung in die Arbeitsstellung zu bringen, muss der Fahrer des Fahrzeuges über eine Steuerung oder manuell eine Vielzahl von Stellorganen betätigen, was einen erheblichen Aufwand mit sich bringt und nur mit entsprechender Übung zu bewerkstelligen ist. Unter Umständen ist die Betätigung der Stellorgane zum Verstellen der Bearbeitungseinrichtung am Ende jeder Zeile mehrmals erforderlich, um das Fahrzeug zu wenden und anschließend erneut in die Reihe mit Pflanzen einzufahren und diese zu bearbeiten.

Die US 2003/0127235 A1 offenbart ein Bodenbearbeitungsgerät mit einem Rahmen, an dem mindestens ein Bodenbearbeitungswerkzeug und Räder angeordnet sind, wobei die Position der Räder und/oder des Bodenbearbeitungswerkzeugs relativ zum Rahmen durch einen Hydraulikzylinder variierbar und durch einen Sensor erfassbar ist. Darüber hinaus ist der Rahmen des Bodenbearbeitungsgerätes über eine Deichsel an ein Zugfahrzeug ankoppelbar, wobei die Deichsel zur Nivellierung des Rahmens mittels eines weiteren Hydraulikzylinders relativ zum Rahmen verschwenkbar ist. Die Verstellung des Bodenbearbeitungsgerätes bzw. der Räder erfolgt entweder durch einen Benutzer oder georeferenziert. Zur Steigerung des Komforts ist vorgesehen, dass das Bodenbearbeitungsgerät tastengesteuert in eine definierte Transportstellung verschwenkt wird.

Die EP 0 916 244 A1 zeigt ein Hub- und Tiefensteuerungssystem für ein an eine Zugmaschine anhängbares landwirtschaftliches Arbeitsgerät, das einen sich quer zur Fahrtrichtung erstreckenden Werkzeuge tragenden Rahmen und mehrere in Querrichtung zueinander beabstandete Hubeinrichtungen zum Anheben und Absenken des Rahmens aufweist. Das Steuersystem enthält mit den Hubeinrichtungen gekoppelte Hydraulikzylinder und Steuerventile, die mit den Hydraulikzylindern und mit einer Hydraulikdruckquelle in Verbindung stehen, um wahlweise die Hydraulikzylinder aus- und einzufahren, so dass die Hubeinrichtungen den Rahmen anheben oder absenken. Es ist ein Zwischentiefen-Bedienelement vorgesehen, um das Arbeitsgerät in eine Lage zu verstellen, in der Werkzeuge lediglich schabend in den Boden eingreifen. Mit einer als rastender Drehknopf ausgebildeten Tiefensteuerung lässt sich durch eine Drehbewegung eine in einer digitalen Anzeige dargestellte Arbeitstiefe einstellen.

Darüber hinaus beschreibt die US-A-4 413 685 ein Pflanzgerät, dessen einzelne Pflanzeinheiten in ihrer Lage durch entsprechende Stelleinrichtungen verstellt werden können, wobei ein Bediener entweder spezielle Schalter oder eine mit einer Rechnersteuerung verbundene Tastatur betätigt.

Schließlich offenbart die WO 03/086050 A1 eine Vorrichtung zum Entfernen von Knospen an Reben mittels Bürsten.

Der Erfindung liegt die Aufgabe zugrunde eine Vorrichtung der eingangs genannten Art zu schaffen, deren Bearbeitungseinrichtung für einen Fahrer komfortabel lageverstellbar ist.

Erfindungsgemäß wird die Aufgabe dadurch gelöst, dass die Bearbeitungseinrichtung und die Steuerung derart ausgebildet sind, dass die Bearbeitungseinrichtung tastengesteuert von einer definierten Transportstellung, in der sie möglichst eng an dem Fahrzeug anliegt, in mindestens eine vorgegebene Arbeitsstellung und umgekehrt verstellt wird, wobei die Steuerung die aktuelle Position der Bearbeitungseinrichtung tastengesteuert als Transportstellung oder Arbeitsstellung speichert.

Aufgrund dieser Maßnahme ist für den Fahrer des Fahrzeuges mit der daran angebauten Bearbeitungseinrichtung eine komfortable sowie schnelle Lageverstellung der Bearbeitungseinrichtung gewährleistet. In der Transportstellung befindet sich die Bearbeitungseinrichtung möglichst eng anliegend an dem Fahrzeug, um eine verhältnismäßig geringe Gesamtbreite und damit eine relativ große Wendigkeit des Fahrzeuges zu gewährleisten. Die Arbeitsstellung wird zum einen durch die Geometrie der Reihenkultur, also deren Höhe und Breite, und zum anderen durch die Neigung des Geländes, auf dem sich die Reihenkultur befindet, vorgegeben. Nach dem Erreichen der zu bearbeitenden Pflanzen betätigt der Fahrer die mit der Steuerung gekoppelte Taste, wodurch die Bearbeitungseinrichtung durch die elektronische Steuerung sowie die zugeordneten Stellorgane aus der Transportstellung in die vorgegebene Arbeitsstellung verfährt, in der das Fahrzeug zwischen den Pflanzreihen hindurchfährt. Beim Ausfahren aus der Reihe der Pflanzen kann der Fahrer durch erneute Tastenbeaufschlagung die Bearbeitungseinrichtung aus der Arbeitsstellung in die Transportstellung verfahren, um das Fahrzeug bei einem geringen Platzbedarf zu wenden und vor einer neuen Reihe zu bearbeitender Pflanzen zu positionieren. Vor dem Einfahren in die Pflanzreihe bringt der Fahrer die Bearbeitungseinrichtung wiederum von der Transportstellung in die Arbeitsstellung. Sonach ist es nicht erforderlich, eine Vielzahl von Stellorganen zu bedienen, um die Bearbeitungseinrichtung in eine entsprechende Lage zu bringen. Selbstverständlich ist es möglich, mehrere Arbeitsstellungen der Bearbeitungseinrichtung zu speichern, so dass beispielsweise unterschiedliche Arbeitsstellungen für mehrere Felder mit verschiedenen geometrischen Bedingungen abgerufen werden können, ohne dass die Bearbeitungseinrichtung beim erneuten Befahren dieser Felder jedes mal manuell in der Arbeitsstellung positioniert werden muss. Bei geneigtem Gelände ist es auch möglich, eine Arbeitsstellung für den Beginn einer Pflanzreihe und eine Arbeitsstellung für das Ende einer Pflanzreihe zu speichern.

Nach einer Weiterbildung des Erfindungsgedankens ist der Steuerung eine Taste zur Einstellung einer vorgegebenen Wendestellung für die Bearbeitungseinrichtung zugeordnet. Idealerweise ist die Wendestellung eine Stellung zwischen der Transportstellung und der Arbeitsstellung. Somit ist es möglich, die Zeit zum Verstellen der Bearbeitungseinrichtung zum Wenden des Fahrzeuges für das Anfahren in eine neue Pflanzreihe zu reduzieren, da die Bearbeitungseinrichtung nicht in die Transportstellung verfahren wird, in der sie in der Regel eine minimale Ausladung hat. Die Wendestellung lässt sich in Abhängigkeit von dem zur Verfügung stehenden Wenderaum definieren.

Um die Lage der Bearbeitungseinrichtung während des Durchfahrens einer Pflanzreihe an die vorhandenen Gegebenheiten anzupassen, umfasst bevorzugt die Steuerung mindestens ein Betätigungselement zur manuellen Positionierung der Bearbeitungseinrichtung. Das Betätigungselement kann beispielsweise als Joystick ausgebildet sein. Die manuelle Positionierung der Bearbeitungseinrichtung kann erforderlich sein, wenn Pflanzen beispielsweise extrem schräg gewachsen sind oder sich versetzt zur Reihe befinden. Die manuelle Positionierung der Bearbeitungseinrichtung kann aber auch zur generellen Veränderung der Arbeitsstellung, der Wendestellung und/oder der Transportstellung genutzt werden. Vorteilhafterweise speichert die Steuerung die aktuelle Position der Bearbeitungseinrichtung tastengesteuert als Wendestellung.

Zweckmäßigerweise sind den Stellorganen Drehwinkel- und/oder Längenmesssensoren zugeordnet, die entsprechende Ist-Werte an die Steuerung liefern. In weiterer Ausgestaltung umfasst die Steuerung einen Soll-Ist-Vergleicher zum Vergleichen der Ist-Werte der Drehwinkel- und/oder Längenmesssensoren mit gespeicherten Werten für die Transportstellung, die Arbeitsstellung oder die Wendestellung. Somit weist die Steuerung eine so genannte Memory-Funktion für die unterschiedlichen Stellungen der Bearbeitungseinrichtung auf.

Nach einer vorteilhaften Weiterbildung des Erfindungsgedankens ist der Steuerung mindestens ein Lese-Schreib-Laufwerk für einen Datenträger zugeordnet, in den die Soll-Werte für die Transport-, Arbeits- und Wendestellung auslesbar eingeschrieben sind. Somit ist die Anzahl der zu speichernden Soll-Werte lediglich von der Kapazität des Datenträgers abhängig, der selbstverständlich sowohl als optischer als auch als magnetischer Datenträger ausgebildet sein kann. Darüber hinaus ist es denkbar, den Datenträger als austauschbaren Datenträger, nämlich eine Diskette, CD oder DVD, auszubilden und unterschiedlichen Bearbeitungseinrichtungen separate Datenträger zuzuordnen, wodurch die Steuerung relativ einfach ausgestaltet sein kann, da eine aufwendige Menüführung nicht erforderlich ist. Der Abruf von Arbeitsstellungen für unterschiedliche Parzellen lässt sich beispielsweise mittels numerischer oder alphanumerischer Codes bewerkstelligen. Zweckmäßigerweise sind in dem Datenträger mehrere auswählbare Arbeitsstellungen auslesbar gespeichert.

Um die Bedienung der Steuerung für den Fahrer weitergehend zu vereinfachen, ist die aktuell benötigte Arbeitsstellung in einem Zwischenspeicher der Steuerung hinterlegt. Die in dem Zwischenspeicher vorhandenen Soll-Werte für die aktuell benötigte Arbeitsstellung lassen sich durch die Beaufschlagung beispielsweise eines Tastschalters verhältnismäßig schnell abrufen, ohne dass sie aus einer Vielzahl von auf dem Datenträger vorhandenen Arbeitsstellungen ausgewählt werden müssen.

Vorzugsweise bewirkt die Steuerung eine derart schrittweise Lageverstellung der Bearbeitungseinrichtung, dass ein Kippen des Fahrzeuges aufgrund einer Schwerpunktverlagerung ausgeschlossen ist. Somit sind Standsicherheitsprobleme des Fahrzeuges vermieden, die insbesondere bei einer zweiseitigen, also rechts und links am Fahrzeug angebrachten Bearbeitungseinrichtung auftreten können.

Bevorzugt ist das Stellorgan als hydraulische Kolben-Zylinder-Einheit ausgeführt. Alternativ dazu ist das Stellorgan als elektromotorisch angetriebene Stellspindel ausgebildet. Hierdurch ist die Lageverstellung auch relativ schwerer Bearbeitungseinrichtungen zuverlässig und kostengünstig sichergestellt.

Bei einer weiteren Ausführung ist die Bearbeitungseinrichtung als Laubschneider mit umgekehrt U-förmig zueinander angeordneten Schneidbalken ausgebildet, wobei ein längsseitiger Schneidbalken lageveränderbar an einer Seite des Fahrzeuges in dessen Frontbereich befestigt ist. Zweckmäßigerweise ist ein die beiden längsseitigen Schneidbalken verbindender Quer-Schneidbalken zumindest längenverstellbar. Bevorzugt sind die längsseitigen Schneidbalken und der Quer-Schneidbalken mit angetriebenen Schneidmessern bestückt. Vorzugsweise ist an jeder Seite des Fahrzeuges ein Laubschneider angeordnet. Insbesondere bei einer derart ausgestalteten Bearbeitungseinrichtung ist eine Vielzahl von Stellorganen vorgesehen, um die Laubschneider an die vorhandenen geometrischen Anforderungen anzupassen. Die Stellorgane bringen die Laubschneider verhältnismäßig schnell und zuverlässig über die Steuerung tastengesteuert in die Transportstellung, Arbeitsstellung oder Wendestellung.

Es versteht sich, dass die vorstehend genannten und nachstehend noch zu erläuternden Merkmale nicht nur in der jeweils angegebenen Kombination verwendbar sind. Der Rahmen der vorliegenden Erfindung ist nur durch die Ansprüche definiert.

Die Erfindung wird im Folgenden anhand eines Ausführungsbeispieles unter Bezugnahme auf die zugehörigen Zeichnungen näher erläutert. Es zeigt:

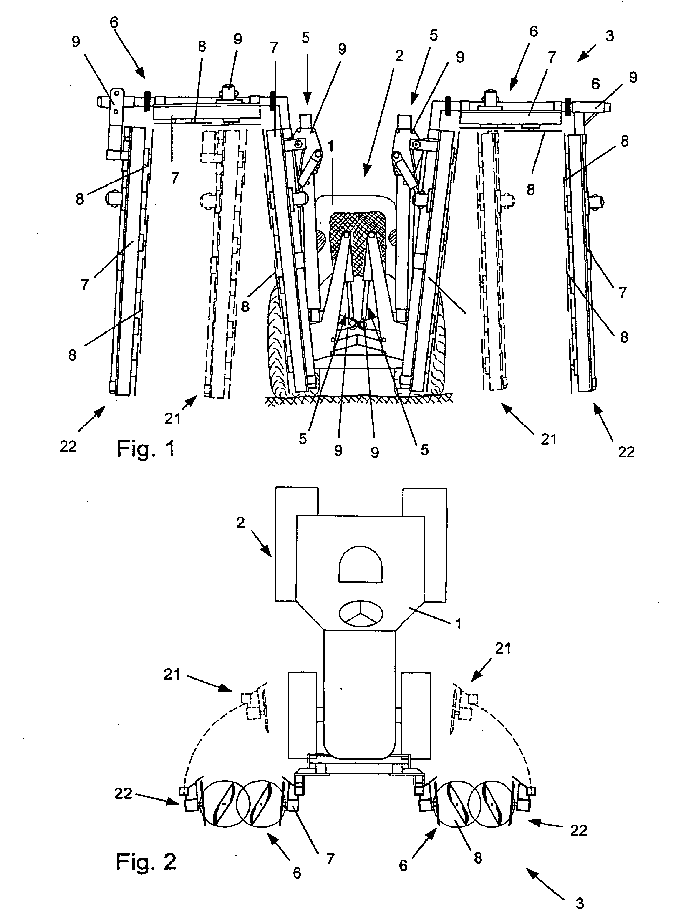

- Fig. 1: eine Vorderansicht eines Fahrzeuges mit einer erfindungsgemäßen Vorrichtung
- Fig. 2: eine verkleinerte Draufsicht auf die Darstellung nach Fig. 2 und

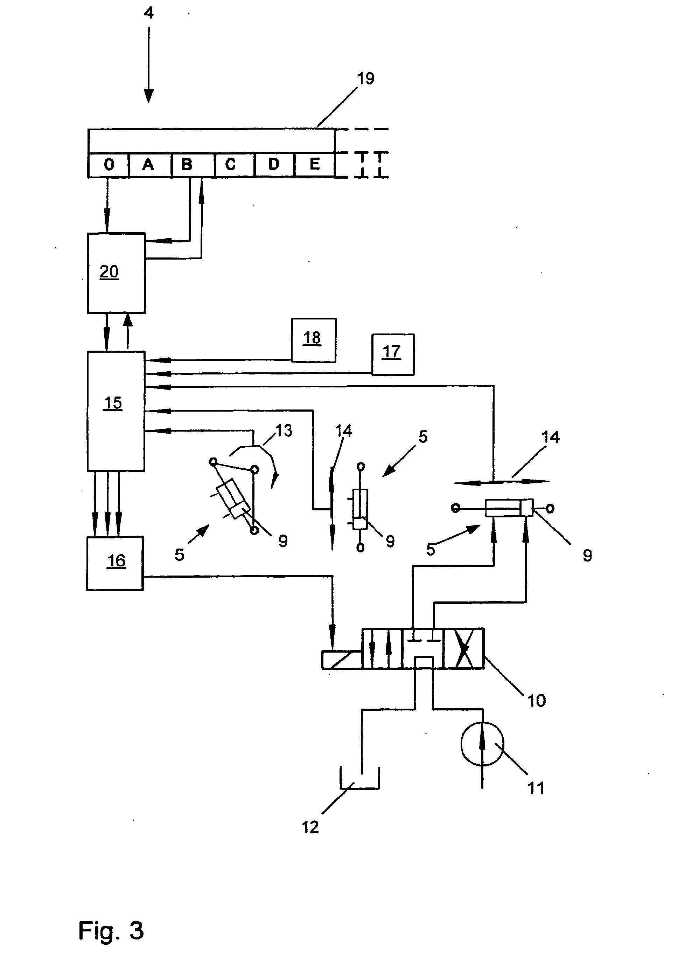

- Fig. 3: ein Blockschaltbild einer Steuerung für die Vorrichtung nach Fig. 1.

Die Vorrichtung umfasst eine frontseitig an ein als Traktor 1 ausgebildetes landwirtschaftliches Fahrzeug 2 angebaute lageverstellbare Bearbeitungseinrichtung 3 für Pflanzen in Reihenkulturen, der eine elektronische Steuerung 4 für Stellorgane 5 der Bearbeitungseinrichtung 3 zugeordnet sind. Die Bearbeitungseinrichtung 3 umfasst zwei gegenüberliegende Laubschneider 6 mit umgekehrt U-förmig zueinander angeordneten Schneidbalken 7, die mit angetriebenen Schneidmessern 8 bestückt sind. Die Stellorgane 5 sind als hydraulische Kolben-Zylinder-Einheiten 9 ausgeführt, die sowohl zwischen dem Traktor 1 und dem entsprechenden längsseitigen Schneidbalken 7 jedes Laubschneiders 6 als auch an den Schneidbalken 7 selbst zur Lageverstellung angeordnet sind. Die Kolben-Zylinder-Einheiten 9 stehen zum einen über Hydraulikventile 10 mit einer Hydraulikpumpe 11 sowie einem Ölvorratsbehälter 12 und zum anderen über Drehwinkel-Messsensoren 13 sowie Längenmesssensoren 14 mit einem Soll-Ist-Vergleicher 15 der Steuerung 4 in Verbindung, wobei der Soll-Ist-Vergleicher 15 über einen Interpreter 16 mit den Hydraulikventilen gekoppelt ist. Im Weiteren steht der Soll-Ist-Vergleicher 15 sowohl mit Lagesensoren 17 des Traktors 1 als auch mit einem Betätigungselement 18 zur manuellen Positionierung der Laubschneider 6 in Verbindung. Soll-Werte für die Einstellung der Kolben-Zylinder-Einheiten 9 und eine Kennung der Bearbeitungseinrichtung 3 sind in einen Datenträger 19 auslesbar eingeschrieben, der über einen Zwischenspeicher 20 mit dem Soll-Ist-Vergleicher 15 kommuniziert. Die Kennung Null der Bearbeitungseinrichtung 3 steht im vorliegenden Fall für die Laubschneider 6, deren Soll-Werte für eine Transportstellung unter A abgelegt sind. Unter B sind Soll-Werte für eine erste Arbeitsstellung hinterlegt. C definiert Soll-Werte für eine Wendestellung der Laubschneider 6 und D sowie E stehen für Soll-Werte weiterer Arbeitsstellungen.

Nach einem ersten Anbau der Laubschneider 6 an den Traktor 1 bringt ein Fahrer des Traktors 1 die Schneidbalken 7 der Laubschneider 6 mittels des Betätigungselementes 18 in die Transportstellung 21, in der die Schneidbalken 7 möglichst nahe an den Seiten des Traktors 1 anliegen, so dass dieser eine verhältnismäßig geringe Gesamtbreite aufweist. Diese Ist-Werte der Transportstellung 21, die über die Drehwinkel- 13 bzw. Längenmesssensoren 14 erfasst werden, schreibt der Fahrer tastengesteuert als Soll-Werte A in den Datenträger 19 ein. Nach dem Erreichen der ersten Parzelle der zu bearbeitenden Pflanzen bringt der Fahrer mittels des Betätigungselementes 18 die Schneidbalken 7 der Laubschneider 6 in die Arbeitsstellung 22, die von geometrischen Bedingungen, wie beispielsweise einer Breite der Reihen oder einer Höhe der Pflanzen, abhängig ist. Die Lage der Schneidbalken 7 wird wiederum über die Drehwinkel- 13 bzw. Längemesssensoren 14 als Ist-Wert erfasst und tastengesteuert als Soll-Wert B für die erste Arbeitsstellung in den Datenträger 19 eingeschrieben. Daraufhin kann der Fahrer mit der Bearbeitung der Pflanzen beginnen. Gelände- oder pflanzenbedingte Korrekturen der Arbeitsstellung 22 können beispielsweise selbsttätig mittels der Lagesensoren 17 oder manuell durch die Beaufschlagung des Betätigungselementes 18 während der Bearbeitung vorgenommen werden. Dabei ist es möglich, diese neuen Ist-Werte als Soll-Werte B in den Datenträger 19 einzuschreiben oder diese zu verwerfen. Fährt der Fahrer aus einer zwischen zwei Reihen von Pflanzen gebildeten Zeile zum Wenden des Traktors heraus, hat er die Möglichkeit, die Laubschneider 6 entweder durch Abruf der Soll-Werte A in die Transportstellung 21 zu verfahren oder eine Wendestellung zu definieren, indem er die Schneidbalken 7 der Laubschneider 6 in eine gewünschte Stellung zwischen der Arbeitsstellung 22 und der Transportstellung 21 bringt und diese Ist-Werte als Soll-Werte C für die Wendestellung in den Datenträger 19 einschreibt. Vor dem erneuten Einfahren in eine Zeile ruft der Fahrer tastengesteuert die Soll-Werte B für die Arbeitsstellung 22 entweder aus dem Datenträger 19 oder dem Zwischenspeicher 20 ab, worauf der Soll-Ist-Vergleicher 15 eine Verstellung der zugeordneten Kolben-Zylinder-Einheiten 9 bewirkt, bis die Ist-Werte der Drehwinkel- 13 bzw. Längenmesssensoren 14 mit den Soll-Werten B der Arbeitsstellung 22 übereinstimmen. Für die Bearbeitung von Pflanzen in weiteren Parzellen mit verschiedenen geometrischen Bedingungen können Soll-Werte D, E für weitere Arbeitsstellungen auf dem Datenträger 19, wie zuvor erläutert, gespeichert werden. Beim erneuten Anbau der Laubschneider 6 an den Traktor 1 stehen sämtliche gespeicherten Soll-Werte A, B, C, D, E unter der Kennung 0 zur Verfügung, weshalb der Fahrer des Traktors 1 eine Lageänderung der Schneidbalken 7 lediglich zur Korrekturzwecken vornehmen muss und erneute zeitaufwendige Einstellungen entfallen.

## Patentansprüche

1. Vorrichtung zum Anbau an ein landwirtschaftliches Fahrzeug (2), insbesondere einen Traktor (1), mit mindestens einer mittels einer elektronischen Steuerung (4) und zugeordnetem Stellorgan (5) lageverstellbaren Bearbeitungseinrichtung (3) für Pflanzen in Reihenkulturen, die zumindest in einer Arbeitsstellung (22), die durch die Höhe und Breite der Pflanzen der Reihenkultur und die Neigung des Geländes bestimmt ist, seitlich über das Fahrzeug (2) hervorsteht, **dadurch gekennzeichnet, dass** die Bearbeitungseinrichtung und die Steuerung (4) derart ausgebildet sind, dass die Bearbeitungseinrichtung (3) tastengesteuert von einer definierten Transportstellung (21), in der sie möglichst eng an dem Fahrzeug (2) anliegt, in mindestens eine vorgegebene Arbeitsstellung (22) und umgekehrt verstellt wird, wobei die Steuerung (4) die aktuelle Position der Bearbeitungseinrichtung (3) tastengesteuert als Transportstellung (21) oder Arbeitsstellung (22) speichert.

2. Vorrichtung nach Anspruch 1, **dadurch gekennzeichnet, dass** der Steuerung (4) eine Taste zur Einstellung einer vorgegebenen Wendestellung für die Bearbeitungseinrichtung (3) zugeordnet ist.

3. Vorrichtung nach Anspruch 1 oder 2, **dadurch gekennzeichnet, dass** die Steuerung (4) mindestens ein Betätigungselement (18) zur manuellen Positionierung der Bearbeitungseinrichtung (3) umfasst.

4. Vorrichtung nach einem der Ansprüche 1 bis 3, **dadurch gekennzeichnet, dass** die Steuerung (4) die aktuelle Position der Bearbeitungseinrichtung (3) tastengesteuert als Wendestellung speichert.

5. Vorrichtung nach Anspruch 1, **dadurch gekennzeichnet, dass** dem Stellorgan (5) Drehwinkel- (13) und/oder Längenmesssensoren (14) zugeordnet sind, die entsprechende Ist-Werte an die Steuerung (4) liefern.

6. Vorrichtung nach einem der Ansprüche 1 bis 5, **dadurch gekennzeichnet, dass** die Steuerung (4) einen Soll-Ist-Vergleicher (15) zum Vergleichen der Ist-Werte der Drehwinkel- (13) und/oder Längenmesssensoren (14) mit gespeicherten Soll-Werten (A, B, C, D, E) für die Transportstellung (21), die Arbeitsstellung (22) oder die Wendestellung umfasst.

7. Vorrichtung nach einem der Ansprüche 1 bis 6, **dadurch gekennzeichnet, dass** der Steuerung (4) mindestens ein Lese-Schreib-Laufwerk für einen Datenträger (19) zugeordnet ist, in den die Soll-Werte (A, B, C, D, E) für die Transport- (21), Arbeits- (22) und Wendestellung auslesbar eingeschrieben sind.

8. Vorrichtung nach Anspruch 7, **dadurch gekennzeichnet, dass** in dem Datenträger (19) mehrere auswählbare Arbeitsstellungen (22) auslesbar gespeichert sind.

9. Vorrichtung nach Anspruch 8, **dadurch gekennzeichnet, dass** die aktuell benötigte Arbeitsstellung (22) in einem Zwischenspeicher (20) der Steuerung (4) hinterlegt ist.

10. Vorrichtung nach einem der Ansprüche 1 bis 9, **dadurch gekennzeichnet, dass** die Steuerung (4) eine derart schrittweise Lageverstellung der Bearbeitungseinrichtung bewirkt, dass ein Kippen des Fahrzeuges (3) aufgrund einer Schwerpunktverlagerung ausgeschlossen ist.

11. Vorrichtung nach einem der Ansprüche 1 bis 5, **dadurch gekennzeichnet, dass** das Stellorgan (5) als hydraulische Kolben-Zylinder-Einheit (9) ausgeführt ist.

12. Vorrichtung nach einem der Ansprüche 1 bis 5, **dadurch gekennzeichnet, dass** das Stellorgan (5) als elektromotorisch angetriebene Stellspindel ausgebildet ist.

13. Vorrichtung nach Anspruch 1, **dadurch gekennzeichnet, dass** die Bearbeitungseinrichtung (3) als Laubschneider (6) mit umgekehrt U-förmig zueinander angeordneten Schneidbalken (7) ausgebildet ist, wobei ein längsseitiger Schneidbalken (7) lageveränderbar an einer Seite des Fahrzeuges (2) in dessen Frontbereich befestigt ist.

14. Vorrichtung nach Anspruch 13, **dadurch gekennzeichnet, dass** ein die beiden längsseitigen Schneidbalken (7) verbindender Quer-Schneidbalken (7)zumindest längenverstellbar ist.

15. Vorrichtung nach Anspruch 13 und 14, **dadurch gekennzeichnet, dass** die längsseitigen Schneidbalken (7) und der Quer-Schneidbalken (7) mit angetriebenen Schneidmessern (8) bestückt sind.

16. Vorrichtung nach einem der Ansprüche 13 bis 15, **dadurch gekennzeichnet, dass** an jeder Seite des Fahrzeuges (2) ein Laubschneider (6) angeordnet ist.

## Claims

1. Apparatus for attachment to an agricultural vehicle (2), in particular a tractor (1), with at least one cultivation apparatus (3), which is adjustable in position by means of an electronic control unit (4) and associated control member (5), for plants cultivated in rows and which, at least in a working position (22) which is determined by the height and width of the plants cultivated in rows and the slope of the land, projects laterally over the vehicle (2), **characterised in that** the cultivation apparatus and the control unit (4) are constructed in such a way that the cultivation apparatus (3) is displaced under keyboard control from a defined transport position (21), in which it rests closely on the vehicle (2), into at least one predetermined working position (22) and *vice versa*, wherein the control unit (4) stores the current position of the cultivation apparatus (3) under keyboard control as the transport position (21) or working position (22).

2. Apparatus as claimed in Claim 1, **characterised in that** associated with the control unit (4) is a key for setting a predetermined turning position for the cultivation apparatus (3).

3. Apparatus as claimed in Claim 1 or Claim 2, **characterised in that** the control unit (4) comprises at least one actuating element (18) for manual positioning of the cultivation apparatus (3).

4. Apparatus as claimed in any one of Claims 1 to 3, **characterised in that** the control unit (4) stores the current position of the cultivation apparatus (3) under keyboard control as the turning position.

5. Apparatus as claimed in Claim 1, **characterised in that** sensors for measurement of the angle of rotation (13) and/or the length (14) are associated with the control member (5) and supply corresponding actual values to the control unit (4).

6. Apparatus as claimed in any one of Claims 1 to 5, **characterised in that** the control unit (4) comprises a desired/actual value comparator (15) for comparison of the actual values from the sensors for measurement of the angle of rotation (13) and/or the length (14) with stored desired values (A, B, C, D, E) for the transport position (21), the working position (22) or the turning position.

7. Apparatus as claimed in any one of Claims 1 to 6, **characterised in that** associated with the control unit (4) is at least one read/write drive for a data carrier (19) in which the desired values (A, B, C, D, E) for the transport position (21), the working position (22) and the turning position are input so as to be readable.

8. Apparatus as claimed in Claim 7, **characterised in that** a plurality of selectable working positions (22) are stored readably in the data carrier (19).

9. Apparatus as claimed in Claim 8, **characterised in that** the currently required working position (22) is stored in a buffer memory (20) of the control unit (4).

10. Apparatus as claimed in any one of Claims 1 to 9, **characterised in that** the control unit (4) effects a step-by-step positional adjustment of the cultivation apparatus in such a way that tipping of the vehicle (3) due to displacement of the centre of gravity is precluded.

11. Apparatus as claimed in any one of Claims 1 to 5, **characterised in that** the control member (5) is constructed as a hydraulic piston/cylinder unit (9).

12. Apparatus as claimed in any one of Claims 1 to 5, **characterised in that** the control member (5) is constructed as an adjusting spindle driven by an electric motor.

13. Apparatus as claimed in Claim 1, **characterised in that** the cultivation apparatus (3) is constructed as a foliage cutter (6) with cutter bars (7) disposed in a reversed U shape with respect to one another, wherein a cutting bar (7) on the long side is fixed so as to be variable in position on one side of the vehicle (2) in the front region thereof.

14. Apparatus as claimed in Claim 13, **characterised in that** a transverse cutting bar (7) which connects the two cutting bars (7) on the long sides is at least adjustable in length.

15. Apparatus as claimed in Claim 13 and Claim 14, **characterised in that** the cutting bars (7) on the long sides and the transverse cutting bars (7) are equipped with driven cutting blades (8).

16. Apparatus as claimed in any one of Claims 13 to 15, **characterised in that** a foliage cutter (6) is disposed on each side of the vehicle (2).

## Revendications

1. Dispositif à rapporter sur un véhicule agricole (2), notamment sur un tracteur (1), avec au moins un dispositif de travail (3) pour des plantes en cultures en lignes dont la position peut être réglée au moyen d'une commande électronique (4) et d'un organe de réglage associé (5) et qui, au moins dans une position de travail (22) qui est déterminée par la hauteur et la largeur des plantes de la culture en lignes et par l'inclinaison du terrain, dépasse du véhicule (2) sur les côtés, **caractérisé en ce que** le dispositif de travail et la commande (4) sont conçus de telle sorte que le dispositif de travail (3) est, en étant commandé par touches, déplacé d'une position définie de transport (21), dans laquelle il s'applique le plus étroitement possible contre le véhicule (2), dans au moins une position prédéfinie de travail (22) et vice versa, sachant que la commande (4), par une commande par touches, mémorise la position actuelle du dispositif de travail (3) comme position de transport (21) ou comme position de travail (22).

2. Dispositif selon la revendication 1, **caractérisé en ce qu'**une touche est associée à la commande (4) pour régler pour le dispositif de travail (3) une position prédéfinie d'exécution d'un demi-tour.

3. Dispositif selon la revendication 1 ou 2, **caractérisé en ce que** la commande (4) comprend au moins un élément d'actionnement (18) pour le positionnement manuel du dispositif de travail (3).

4. Dispositif selon l'une des revendications 1 à 3, **caractérisé en ce que** la commande (4), par une commande par touches, mémorise la position actuelle du dispositif de travail (3) comme position d'exécution d'un demi-tour.

5. Dispositif selon la revendication 1, **caractérisé en ce que** des capteurs de mesure d'angle de rotation (13) et/ou de longueur (14) sont associés à l'organe de réglage (5), et ils délivrent à la commande (4) des valeurs réelles correspondantes.

6. Dispositif selon l'une des revendications 1 à 5, **caractérisé en ce que** la commande (4) comprend un comparateur consigne/réel (15) pour comparer les valeurs réelles des capteurs de mesure d'angle de rotation (13) et/ou de longueur (14) à des valeurs de consigne mémorisées (A, B, C, D, E) pour la position de transport (21), la position de travail (22) ou la position d'exécution d'un demi-tour.

7. Dispositif selon l'une des revendications 1 à 6, **caractérisé en ce qu'**est associé à la commande (4) au moins un lecteur-enregistreur pour un support de données (19) sur lequel sont enregistrées, avec possibilité de lecture, les valeurs de consigne (A, B, C, D, E) pour la position de transport (21), la position de travail (22) et la position d'exécution d'un demi-tour.

8. Dispositif selon la revendication 7, **caractérisé en ce que** plusieurs positions de travail sélectionnables (22) sont enregistrées avec possibilité de lecture sur le support de données (19).

9. Dispositif selon la revendication 8, **caractérisé en ce que** la position de travail (22) actuellement nécessaire est enregistrée dans une mémoire intermédiaire (20) de la commande (4).

10. Dispositif selon l'une des revendications 1 à 9, **caractérisé en ce que** la commande (4) produit une modification progressive de la position du dispositif de travail de telle sorte qu'un basculement du véhicule (2) suite à un déplacement du centre de gravité est exclu.

11. Dispositif selon l'une des revendications 1 à 5, **caractérisé en ce que** l'organe de réglage (5) est réalisé sous forme d'ensemble hydraulique piston-cylindre (9).

12. Dispositif selon l'une des revendications 1 à 4, **caractérisé en ce que** l'organe de réglage (5) est réalisé sous forme de broche de réglage entraînée par moteur électrique.

13. Dispositif selon la revendication 1, **caractérisé en ce que** le dispositif de travail (3) est réalisé sous forme de coupe-feuilles (6) avec des barres de coupe (7) disposées les unes par rapport aux autres en forme de U inversé, sachant qu'une barre de coupe longitudinale (7) est fixée avec possibilité de modification de position sur un côté du véhicule (2) dans la région avant de ce dernier.

14. Dispositif selon la revendication 13, **caractérisé en ce qu'**une barre de coupe transversale (7) reliant les deux barres de coupe longitudinales (7) est au moins réglable en longueur.

15. Dispositif selon les revendications 13 et 14, **caractérisé en ce que** les barres de coupe longitudinales (7) et la barre de coupe transversale (7) sont équipées de couteaux entraînés (8).

16. Dispositif selon l'une des revendications 13 à 15, **caractérisé en ce qu'**un coupe-feuilles (6) est disposé sur chaque côté du véhicule (2).
